(19) **Europäisches Patentamt**
**European Patent Office**
**Office européen des brevets**

(11) **EP 1 455 589 B1**

(12) **EUROPEAN PATENT SPECIFICATION**

(45) Date of publication and mention
of the grant of the patent:
**03.09.2008 Bulletin 2008/36**

(51) Int Cl.:
*A23D 7/02* (2006.01)   *A23D 7/00* (2006.01)

(21) Application number: **02791837.4**

(22) Date of filing: **16.12.2002**

(86) International application number:
**PCT/EP2002/014372**

(87) International publication number:
**WO 2003/053151 (03.07.2003 Gazette 2003/27)**

(54) **OIL IN WATER EMULSIONS COMPRISING A BLEND OF BIOPOLYMERS**

ÖL-IN-WASSER EMULSIONEN ENTHALTEND EINE MISCHUNG VON BIOPOLYMEREN

EMULSIONS HUILE-DANS-EAU COMPRENANT UN MELANGE DE BIOPOLYMERES

(84) Designated Contracting States:
**AT BE BG CH CY CZ DE DK EE ES FI FR GB GR IE IT LI LU MC NL PT SE SI SK TR**

(30) Priority: **21.12.2001 EP 01310852**

(43) Date of publication of application:
**15.09.2004 Bulletin 2004/38**

(73) Proprietors:
• **Unilever N.V.**
  **3013 AL Rotterdam (NL)**
  Designated Contracting States:
  **AT BE BG CH CZ DE DK EE ES FI FR GR IT LI LU MC NL PT SE SI SK TR**
• **Unilever PLC**
  **London**
  **Greater London EC4P 4BQ (GB)**
  Designated Contracting States:
  **CY GB IE**

(72) Inventors:
• **BUFFET, Gaelle X.,**
  **c/o Unilever R & D**
  **Sharnbrook,**
  **Bedfordshire MK44 1LQ (GB)**

• **FOSTER, Timothy John,**
  **c/o Unilever R & D**
  **Sharnbrook,**
  **Bedfordshire MK44 1LQ (GB)**

(74) Representative: **Joppe, Hermina Laura Petronella et al**
  **Unilever Patent Group**
  **Olivier van Noortlaan 120**
  **3133 AT Vlaardingen (NL)**

(56) References cited:
  **EP-A- 0 949 295**      **WO-A-95/35036**
  **GB-A- 1 094 268**     **US-A- 3 978 243**
  **US-A- 5 252 352**     **US-A- 5 904 949**

• **BRUMMEL S E ET AL: "SOLUBLE HYDROCOLLOIDS ENABLE FAT REDUCTION IN PROCESS CHEESE SPREADS" JOURNAL OF FOOD SCIENCE, INSTITUTE OF FOOD TECHNOLOGISTS. CHICAGO, US, vol. 55, no. 5, 1 September 1990 (1990-09-01), pages 1290-1292,1307, XP000165104 ISSN: 0022-1147**

**Description**

**Field of the invention**

This invention relates to a composition suitable for replacing gelatin and or protein in oil and water containing emulsions, especially in water continuous food products.

**Background of the invention**

Gelatin is used in a wide range of products. In particular gelatin is often included in water and oil containing food emulsions such as margarines and low fat spreads. In these products the gelatin influences the stability, mouth feel, melting behaviour, syneresis, texture, and appearance positively.

Although gelatin offers many advantageous properties to food products, its replacement has been subject of numerous studies in the art. Large consumer groups such as vegetarians and people who prefer to eat kosher food are adverse to the consumption of gelatin, or milk protein.

WO-A-00/36930 discloses a gelatin replacer which is a gelling composition comprising alginate, hydrocolloid and galactomannan. Although such composition may show some of the characteristics of gelatin, it was found not to fulfil all desires with respect to a gelatin replacer. Also the replacement of one ingredient by a complicated mix of three different ingredients necessitates the inclusion of more ingredients on the ingredient list of the commercial product.

Furthermore EP-A-474299 discloses replacement of gelatin in a water in oil emulsion by an agar containing dispersed aqueous phase, which is present in a concentration exceeding the critical gelling concentration and which aqueous phase further comprises protein and a viscosity enhancer. Also in this document the selected system is a complicated mixture of ingredients.

US 3,978,243 describes a method of preparing a gelled sour milk product which comprises stabilising sour milk with 0.1% to 5% by weight of sour milk of a stabiliser selected from the group consisting of high methoxyl pectin, carboxymethyl cellulose, and propylene glycol alginate, and gelling said stabilised sour milk product by adding 0.2% to 2% by weight of the entire gelled product of a gelling agent selected from the class consisting of low methoxyl pectin, carrageenan, and furcelleran.

Brummels et al., Journal of Food Science vol. 55, no.5 (1990), 1290-1292 report how about 40% and 50% fat reduction was obtained relative to a control cheese spread containing 25% fat by replacing the lipids in the cheese spread by an aqueous dispersions of soluble hydrocolloids. Hydrocolloids investigated included low-viscosity guar gum, high-methoxyl pectin (three different samples with DE 58-62%, 63-67% and 71-75% respectively), λ-carrageenan, propylene glycol alginate, xanthan gum and Zooglan 115.

US 5,252,352 discloses a process for preparing a water-continuous margarine-like spread, comprising: preparing a mixture comprising fat at a level not greater than 5%, casein and a gel forming system including about 0.5% to about 1.5% a gelling agent A selected from the group consisting of gelatin, kappa-carrageenan, iota-carrageenan, alginate, agar, gellan, pectin and mxtures thereof and about 2% to about 12% of a gelling agent B selected from the group consisting of gelling starch, denatured whey protein, denatured bovine serum protein, denatured soy protein, microcrystalline cellulose and mixtures thereof; followed by homgenisation; heating; homogenisation; and packing.

In oil and water emulsions gelatin exhibits several functionalities. The main functions are surface activity in water continuous systems, thereby stabilising the emulsion, and gelling/viscosifying properties which induce structure and prevent or minimise water drainage (syneresis). Furthermore gelatin creates emulsion bridging that enhances the networks to provide texture and mouth feel and in-mouth breakdown to the emulsion product. The extent to which gelatin plays these different roles simultaneously depends on the food system in which it is being used and largely on the process used. In the absence of any other surface active materials, for example, proteins, phospholipids or monoglycerides, it will contribute all of the above. In the presence of these other surface active ingredients there will be competition at the oil/water interface. We have found that in such cases gelatin still plays a role in emulsion stabilisation, particularly, for example, when a milk protein containing emulsion is homogenised in acidic conditions.

A similar desire exists for replacing dairy proteins such as casein. Casein has similar functionality in emulsion stabilisation, compared to gelatin, particularly if the emulsion is gelled via acidification or enzyme action (rennet or transglutaminase). However, there is an increasing trend towards lactose intolerance, requiring traditionally recognised dairy textures to be reproduced using non-dairy ingredients.

None of the documents cited above provide a composition that fulfils these characteristics of gelatin and or protein.

Therefore it is an object of the invention to provide a composition that is a suitable replacer for gelatin and or protein, that preferably shows a combination of these functionalities.

**Summary of the invention**

We have surprisingly found that a blend of biopolymer comprising a combination of a surface-active biopolymer and a gelling biopolymer can fulfil the objective.

Therefore the invention relates to an oil in water emulsion comprising 20 to 60 wt.% fat and from 0.05 to 2 wt% on total emulsion weight of a surface active polymer and from 0.05 to 3 wt% on total emulsion weight of a gelling polymer, which is at least partly gelled, and comprises less than 0.1 wt. % gelatin

In a further aspect the invention relates to a process for preparing such emulsions.

**Detailed description of the invention**

In this specification and claims the terms fat and oil are used interchangeably.

The term wt% refers to weight % on total emulsion weight unless otherwise is indicated.

The term polymer is used to indicate preferably biopolymers. Proteins are not included in the term polymer.

The melting characteristics of the emulsions according to the invention were determined using rheological measurements such as variation of G' over time while a certain temperature profile is followed. The method to determine a melting profile and G' is described in the examples.

Oil in water emulsions according to the invention comprise an aqueous phase which is the continuous phase and a dispersed fat phase. The emulsion comprises a combination of a gelling polymer, and a surface active polymer. Preferably the polymers are biopolymers, more preferred polysaccharides. The surface active polymer is preferably selected from the group comprising pectin such as acetylated pectin, alginate such as propylene glycol alginate, and octenylsuccinic acid modified starches (OSA) or a combination thereof.
The gelling polymer is preferably selected from the group comprising low methoxy pectin, gelling alginate, gelling starch, high methoxy pectin, or a combination thereof.

These combinations may replace gelatin and or protein (eg casein, caseinate, soy). Alternatively these combinations may be added in addition to (part of) a protein containing food system, in replacement of (parts of) gelatin. Without wishing to be bound by any theory it is believed that the surface active counterpart of the polymer plays a role in emulsion stabilisation by its presence at the oil/water interface. The gelling counterpart of the polymer is believed under the conditions described to interact with the surface active polymer at the emulsion interface, creating a stable emulsion and also contributing to a thickened/gelled aqueous phase thereby also contributing to aqueous phase stability and reduced syneresis. Therefore it is essential that the gelling polymer is at least partly gelled. Preferably at least 50 wt% of the gelling polymer is gelled, more preferred essentially all of the gelling polymer is gelled.

The combination of surface active and gelled polymer is especially preferred in an oil in water emulsion. The presence of the surface-active polymer is believed to help create and stabilise small micron-size fat droplets. The fat droplets preferably have a mean diameter of from 0.5 to 10 $\mu$m. The oil droplets will then be embedded in an aqueous gel, immobilising said oil droplets and hence preventing coalescence of the oil droplets.
In a highly preferred embodiment the gelling polymer and the surface active polymer are part of the same family of polymers. This among others may lead to a short ingredient list on final packaging.

The terms surface active polymer, such as pectin/alginate and gelling polymer, such as gelling pectin/alginate are believed to be well known to a person skilled in the art.
A suitable surface-active pectin is acetylated pectin, typically obtained from sugar beet. A suitable surface active alginate is propyleneglycolalginate (PGA), with examples being in the series Protanal Ester from FMC, Kelcoloid and Manucol Ester and ISP Alginates. An example of gelling pectin is low methoxy pectin. Trade examples of gelling pectin are LM104[tm] from CP Kelco, LM pectin from CP Kelco, Citrus pectin from Sigma, Grindsted [tm] Pectin LA 000 range, LA 100 range, LA 200 range, Grindsted[tm] Pectin LC700 range, LC900 range. Examples of gelling alginate are protanal [tm] from FMC, manucol[tm] or manugel[tm] from ISP. In the case of high solids containing food systems e.g. high sugar content, a high methoxy pectin such as DD slow set, BB rapid set from CPKelco, HM6 from Hercules/Kelco, Grindsted Pectin SS 200 range, MRS 300 range, RS400 range from Danisco and Citrus pectin from Sigma may be applied.

The at least partial gelation of the gelling polymer is preferably obtained by including a gelling agent. The gelling agent is preferably selected from the group comprising divalent cations, preferably calcium salt; sugars or a combination thereof.

The gelation of the gelling polymer such as gelling Low Methoxy- pectin or alginate is preferably mediated with a gelling agent which is for example a divalent or trivalent food grade cation, preferably a divalent cation, more preferably $Ca^{2+}$. The introduction of cations e.g. calcium is preferably controlled so that hydration of the polymer and emulsification of oil droplets precedes gel formation. This may for example be achieved by using the pH dependence of the solubility of calcium salts eg. $CaCO_3$ , $CaSO_4$ and mixtures thereof.
Commercial examples of other possible cations (Fe2+, Cu2+, Mg2+) include Magnesium carbonate (E504)/ Magnesium chloride (E511)/ Iron hydroxide (E172)/ Zinc/ Copper complexes. Some of these could be an advantage for inclusion in fortified foods.

The amount of gelling agent that is needed to obtain gelation will depend on the concentration and type of gelling agent that is used. It is believed to be within the capability of the skilled person to find the amount for a particular situation, based on guidance provided in product specification sheets.

Alternatively to the inclusion of a gelling agent, the conditions in the emulsion are selected such that at least partial gelation is obtained. This may e.g. be achieved by heating and subsequent cooling if the gelling polymer is a starch, specifically in combination with the emulsion stabilised with OSA. Alternatively the gelation is mediated by reduction of pH. According to another alternative the gelation is mediated by a high solids content, preferably more than 60 wt% on total emulsion where the gelling polymer is a high methoxy pectin. Such high solids content may for example be obtained by including sugars or syrups (non-sweet option) in the emulsion.

The High Methoxy pectin gelation is preferably mediated by the addition of a high solids content derived from sugar in combination with acidic pH of about 2.8 to 3.5. Generally after boiling such compositions gel on cooling.

The amount of surface active polymer is from 0.05 to 2 wt% on water containing composition, preferably from 0.1 to 1.5 wt%, more preferred from 0.1 to 1 wt% on total emulsion weight. It will be appreciated that the optimal concentration of surface active polymer is dependent on the amount needed for surface coverage of the dispersed oil phase, which varies with oil content. Therefore in a preferred embodiment, the amount of surface active polymer is from 0.1 to 0.5% for an oil in water emulsion comprising from about 15 to about 25 wt% fat. According to another preferred embodiment, the amount of surface active polymer is from 0.5 to 2 wt% for an oil in water emulsion comprising from about 55 to about 65 wt% oil.

The method to determine surface coverage of surface active polymer is illustrated in the examples.

The amount of gelling polymer is from 0.05 to 3 wt% on total emulsion weight and more preferred up to 5 wt% on aqueous phase of water containing composition, preferably from 0.05 to 3 wt%, more preferably from 0.2 to 2 wt% on aqueous phase.

The emulsions according to the invention were found to be stable and show desired mouthfeel without the need to add gelatin. Therefore, the invention relates to an oil in water emulsion wherein the amount of gelatin is less than 0.1 wt%.

It was found that the combination of a gelling polymer and a surface active polymer is also suitable to replace at least part of the protein in such emulsion. Such protein may for example be milk protein, soy protein or pea protein. Therefore in another embodiment, the invention relates to an oil in water emulsion wherein the amount of protein, specifically casein, is less than 2 wt%, preferably less than 1 wt%, more preferred less than 0.1 wt%. It is believed that in such products the surface active polymer is able to compete at the oil: water interface, specially when homogenisation of the product is carried out under acidic conditions.

In a preferred embodiment, the invention relates to an oil in water emulsion as described above wherein the amount of protein, especially casein, is less than 2 wt%, preferably less than 1 wt%, more preferred less than 0.1 wt%, specifically for products with pH higher than 5.

The emulsions according to the invention comprise a fat phase. The amount of fat is 20 to 60 wt%. The type of fat may be any fat. The fat is preferably selected from vegetable fat, fish oil and butter fat. Suitable fats are e.g. palm oil, soy bean oil, olive oil, palm kernel oil, coconut oil, sunflower oil, rape seed oil and combinations thereof. The fats may be used as such after refining but may also have been subjected to further processing such as hardening and interesterification.

The emulsions are preferably spreadable emulsions. Such emulsions generally show a Stevens value at 20 °C of from 25 to 1000 g, preferably 50 to 500 g. The method to determine Stevens value hardness is described in the examples.

The emulsions according to the invention are preferably food products. Preferably the emulsions are or form part of the following selection of food products: spreads, dressings, sauces, drinks, desserts, rehydratable emulsion products, dips.

The emulsion may optionally contain further ingredients such as fat replacer (e.g. inulin, maltodextrin), herbs, flavour components, colouring agents, preservative, fruit pieces, fruit puree or homogenates.

The invention is illustrated in the following non-limiting examples.

## Examples

General

Surface coverage study

An emulsion stability study was done using different levels of surface-active polymer at varying fat levels to establish the surface coverage. The method was as follows:

An emulsion of oil and water was prepared with biopolymer. If surface coverage is 100% and there is more surface active biopolymer, this biopolymer is found in the continuous aqueous phase of the emulsion. To determine this amount, the sample is centrifuged at 1000g. The relative viscosity of the remaining serum is converted to a concentration (b) of biopolymer (g/litre). If one starts from a 20wt% (200 g oil) oil in water emulsion, the amount of biopolymer unabsorbed is b*0.8. The amount absorbed is the starting concentration -b. Oil volume is 200/0.915. The total surface area is the specific surface are $m^2$/ml (Mastersizer) * volume oil.

```
Surface coverage  = the amount absorbed/total surface area
```
$$(mg/m^2).$$

Droplet size was measured with a Malvern mastersizer which derives a volume distribution from the light diffraction pattern measured by an array of detectors. Parameters used in this study:

Range lens: 45 mm
Analysis model: Polydisperse
Beam length: 2.6 mm. The results are mainly D3,2 determinations in micrometers.

**Stability**

Samples were visualised over an eight week period, stored at 5°C, either by eye, measuring the extent of cream layer formulation or measuring droplet sizes using a Malvern Mastersizer.

**Stevens value hardness**

- Probe: mayonnaise grid (2) (see description of the grid in WO-A-01/41586) which is used for soft non gelled/spread sample or perspex 12.7mm cylindrical probe (1) for harder spreads (e.g. with milk protein)
- Test: Peak Penetration
- Penetration distance: 10mm
- Speed: 2mm/sec
- Condition: within 5 minutes of sample removal from fridge (5°C)
- Temperature test: 20°C

The Stevens hardness value was determined at in g.

Rheology

Determination of G' versus time.

Rheological measurements were done with a Physica UDS 200 stress controlled rheometer. The sample was heated to 60 °C and loaded into a Z3 geometry also set at 60 °C. The temperature profile was cooling from 60 to 5 °C at 1°C per minute and then the samples were held at 5 °C for 2 hours. A melting curve was subsequently recorded: for example from 5 to 37 °C at 1 °C per minute, followed by holding at 37 °C for 1 hour to have an idea on the in mouth melting behaviour. G' modulus was recorded at 0.5% strain and 1 Hz frequency over the temperature range.

Identification of pectin

1- Confocal picture of the whole spread, using Rhodamine staining and a combination of 2 fluorescence channels (488nm and 633 nm) will demonstrate if some surface active material is present at the interface.

2-If that is the case a further analysis is carried out. A chemical evaluation is done to check the presence of sugar beet pectin. The method will allow to distinguish the presence of sugar beet pectin among alginate/ protein/galactomannan/ starch/ low methoxy or high methoxy pectin, by using specific molecular markers of such biopolymers e.g. ferulic acids (HPLC: High Performance Liquid Chromatography) and arabinose (HPAEC-PAD: High pH Anion Exchange Chromatography with Pulsed Amperometric Detection or CZE: Capillary Zone Electrophoresis), which are very uncommon in other food biopolymers.

The detailed method is in 3 steps:

a) Total digestion of the sample:
Recognised TFA hydolysis method illustrated by A. Oosterveld, G. Bedlman, HA. Schols, AGJ. Voragen Carbohydrate Research 288 (1996) 143-153.
b) Ferulic acid presence:
From the solution obtained above, HPLC is run according to the method: A. Harukaze, S. Sugiyama, Y Iwamoto, M. Murata, S. Homma in Food Sci. Technol. Res. 6 (2) 2000 122-125 to identify the presence of ferulic acids.
c) Confirmation through neutral sugar composition characterisation:
FA. Chen, TS. Dobashi, RA Evangelista Glycobiology 8 (11) 1998 1045-1052 presents a capillary electrophoresis method to look for neutral sugars.
Neutral sugar characterisation via HPAEC-PAD.

The alginate identification:

The presence of propylen glycol alginate is confirmed by deesterification at high pH (>10) with time. A method similarly to a method used for pectin acetylation determination, is preferred that looks at the apparition of propionic acid (on top of methanol) reflects the side chains branched on the alginate backbone: This can be picked up by GC (Gas Chromatography).

***Process***

*The process included the following sequential steps:*

A) Biopolymers, salt, preservative, fat, and water were mixed and held for 15 minutes under stirring at 70 °C.

B) The emulsion was acidified to pH 4.7 by the addition of acids (e.g. lactic acid/ citric acid or a combination of acids).

C) The emulsion was homogenised at 250 bar and >65 °C (mostly around 70 °C).

D) The product was filled hot into packaging material.

During the entire process it was assured that the temperature did not decrease below 60 °C. The gelling agent may be added at any time before step (D), depending on the emulsion viscosity. In the case of an acidified dairy emulsion where the biopolymers are from a pectin source, they were added after step (B).
Compositions are in table 1 in wt% total emulsion

Manucol DM= gelling alginate
PGA= polypropylen glycol alginate (e.g. Kelcoloid S)
LM104= low methoxy amidated pectin (28% degree of esterification, 20% degree of amidation)
X-3953= low methoxy pectin (35% degree of esterification) Paselli SA2= maltodextrin
HM6= high methoxy pectin
SMP= skimmed milk powder
LBG= locust bean gum
Beta pectin= sugar beet pectin
TFA: tri-fluoro acetic acid.

Table 1: Composition of products according to comparative example C1 and C2 and according to examples 1-10.

| Samples | Fat phase | Gelling biopolymer | Surface active biopolymer | Gelling agent | Extra ingredients | Results | Stevens (g)* |
|---|---|---|---|---|---|---|---|
| Comparative example C1 | 20 | 0.7% gelatin | 10% SMP | - | 0.3% LBG | Spread | 160 (1) |
| C2 | 20 | 0.7% gelatin | 10% SMP | - | 0.3% LBG | Spread | 80 (1) |
| **Examples** | | | | | | | |
| 1 | 20 | 1.2% manucol DM | 0.12% PGA | Ca | - | Gelled | 450 (2) 150 (1) |
| 2 | 20 | 0.8% LM104 | 0.15% beta-pectin | Ca | - | Gelled | 537 (2) 164 (1) |
| 3 | 20 | 1% LM104 | 0.15% beta-pectin | Ca | - | Gelled | 458 (2) 130 (1) |
| 4 | 20 | 0.8% X-3953 | 0.15% beta-pectin | Ca | 15% Paselli SA2 | Spread | 87 (2) 280 (2) |
| 5 | 20 | 1.2% manucol DM | 0.12% PGA | Ca | 15% Paselli SA2 | Spread | - |
| 6 | 60 | 0.8% LM104 | 1.2% beta-pectin | Ca | 5% Amioca | Dip/ Spread | 263 (2) |
| 7 | 20 | 3% HM6 | 0.15% beta-pectin | 60% sucrose | - | Stretchy Dip | 40 (2) |
| 8 | 20 | 0.8% manugel DMB | 0.12% PGA | 10% SMP as cations source | 0.3% LBG | Spread | 300 (1) |
| 9 | 20 | 0.8% LM104 | 0.15% beta-pectin | 10% SMP as cations source | 0.3% LBG | Spread | 822 (2) 160 (1) |

Fat blend:

Comparative example C1: mixture of coconut oil with melting point around 31 °C and a palm oil fraction.
C2: Sunflower oil
Example 1-2, 4, 6: sunflower oil
Example 3, 5, 7, 8, 9: mixture of coconut oil with melting point around 31 °C and a palm oil fraction.
The amount of Ca as gelling agent was varied and was generally around 0.25r
R value is an index which is used to indicate the amount of Ca needed for gelation. In our examples the amount of Ca was between 0.125r and 0.5r.

The compositions of examples 1-9 showed a sustained decrease in modulus G' over time while held at 37 °C. When perceived in mouth this is interpreted as a melting behaviour.
Comparative example C1 and C2 where the claimed combination of biopolymers was replaced with gelatin, showed similar melting behaviour compared to the example 1-9.
The emulsions of example 1-9 were stable and did not show creaming on storage at 5 °C for 8 weeks.

## Claims

1. Oil in water emulsion comprising 20 to 60 wt% fat and from 0.05 to 2 wt% on total emulsion weight of a surface active polymer and from 0.05 to 3 wt% on total emulsion weight of a gelling polymer, which is at least partly gelled, and comprises less than 0.1 wt% gelatin.

2. Oil in water emulsion according to claim 1 wherein the surface active polymer is selected from the group comprising acetylated pectin, propylene glycol alginate, octenylsuccinic acid modified starches (OSA) or a combination thereof.

3. Oil in water emulsion according to claim 1 wherein the gelling polymer is selected from the group comprising low methoxy pectin, gelling alginate, gelling starch, high methoxy pectin, or a combination thereof.

4. Oil in water emulsion according to any of claims 1-3 wherein the at least partial gelation is obtained by the presence of gelling conditions.

5. Oil in water emulsion according to claim 4 wherein the gelling conditions are mediated by a gelling agent which is preferably selected from the group comprising divalent cations, preferably calcium salt; sugars or a combination thereof.

6. Oil in water emulsion according to any of claims 1-5 wherein the gelling polymer and the surface active polymer are part of the same family of polymers.

7. Oil in water emulsion according to any of claims 1-6 wherein the amount of protein, especially casein, is less than 2 wt%, preferably less than 1 wt%, more preferred less than 0.1 wt%.


## Patentansprüche

1. Öl-in-Wasser-Emulsion, umfassend 20 bis 60 Gew.-% Fett und 0,05 bis 2 Gew.-%, basierend auf dem gesamten Emulsionsgewicht, eines oberflächenaktiven Polymers, und 0,05 bis 3 Gew.-%, basierend auf dem gesamten Emulsionsgewicht, eines gelbildenden Polymers, das zumindest teilweise geliert ist, und weniger als 0,1 Gew.-% Gelatine.

2. Öl-in-Wasser-Emulsion nach Anspruch 1, wobei das oberflächenaktive Polymer aus der Gruppe, umfassend acetyliertes Pektin, Propylenglykolalginat, Octylbernsteinsäure-modifizierte Stärken (OSA) oder einer Kombination davon, ausgewählt ist.

3. Öl-in-Wasser-Emulsion nach Anspruch 1, wobei das gelbildende Polymer aus der Gruppe, umfassend Pektin mit niedrigerem Methoxy-Anteil, gelierendes Alginat, gelierende Stärke, Pektin mit hohem Methoxy-Anteil oder einer Kombination, davon ausgewählt ist.

4. Öl-in-Wasser-Emulsion nach einem der Ansprüche 1 bis 3, wobei die zumindest teilweise Gelierung durch die Anwesenheit von gelbildenden Bedingungen erhalten wird.

5. Öl-in-Wasser-Emulsion nach Anspruch 4, wobei die gelbildenden Bedingungen durch ein gelbildendes Agens, das bevorzugt aus der Gruppe, umfassend divalente Kationen, bevorzugt ein Calciumsalz, Zucker oder einer Kombination davon, ausgewählt ist, vermittelt werden.

6. Öl-in-Wasser-Emulsion nach einem der Ansprüche 1 bis 5, wobei das gelbildende Polymer und das oberflächenaktive Polymer zur selben Familie von Polymeren gehören.

7. Öl-in-Wasser-Emulsion nach einem der Ansprüche 1 bis 6, wobei die Menge an Protein, speziell Casein, geringer als 2 Gew.-%, bevorzugt geringer als 1 Gew.-%, besonders bevorzugt weniger als 0,1 Gew.-% ist.


## Revendications

1. Émulsion huile dans l'eau comprenant de 20 à 60 % en poids de matière grasse, de 0,05 à 2 % en poids, sur la base du poids total de l'émulsion, d'un polymère tensioactif et de 0,05 à 3 % en poids, sur la base du poids total de l'émulsion, d'un polymère gélifiant, qui est au moins partiellement gélifié, et comprend moins de 0,1 % en poids de gélatine.

2.   Émulsion huile dans l'eau selon la revendication 1, dans laquelle le polymère tensioactif est choisi dans le groupe comprenant la pectine acétylée, l'alginate de propylène glycol, les amidons modifiés par l'acide octénylsuccinique (OSA) ou une combinaison de ceux-ci.

3.   Émulsion huile dans l'eau selon la revendication 1, dans laquelle le polymère gélifiant est choisi dans le groupe comprenant la pectine à faible teneur de méthoxy, l'alginate gélifiant, l'amidon gélifiant, la pectine à teneur élevée de méthoxy, ou une combinaison de ceux-ci.

4.   Émulsion huile dans l'eau selon l'une quelconque des revendications 1 à 3, dans laquelle la gélification au moins partielle est obtenue en présence de conditions de gélification.

5.   Émulsion huile dans l'eau selon la revendication 4, dans laquelle les conditions de gélification sont induites par un agent de gélification qui est, de préférence, choisi dans le groupe comprenant les cations divalents, de préférence, un sel de calcium ; des sucres ou une combinaison de ceux-ci.

6.   Émulsion huile dans l'eau selon l'une quelconque des revendications 1 à 5, dans laquelle le polymère gélifiant et le polymère tensioactif font partie de la même famille de polymères.

7.   Émulsion huile dans l'eau selon l'une quelconque des revendications 1 à 6, dans laquelle la quantité de protéine, notamment, de caséine, est inférieure à 2 % en poids, de préférence, inférieure à 1 % en poids, et mieux encore, inférieure à 0,1 % en poids.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0036930 A
- EP 474299 A
- US 3978243 A
- US 5252352 A
- WO 0141586 A

**Non-patent literature cited in the description**

- **BRUMMELS et al.** *Journal of Food Science,* 1990, vol. 55 (5), 1290-1292
- **A. OOSTERVELD ; G. BEDLMAN ; HA. SCHOLS ; AGJ. VORAGEN.** *Carbohydrate Research,* 1996, vol. 288, 143-153
- **A. HARUKAZE ; S. SUGIYAMA ; Y IWAMOTO ; M. MURATA ; S. HOMMA.** *Food Sci. Technol. Res.,* 2000, vol. 6 (2), 122-125
- **FA. CHEN ; TS. DOBASHI ; RA EVANGELISTA.** *Glycobiology,* 1998, vol. 8 (11), 1045-1052